Europäisches Patentamt

European Patent Office

Office européen des brevets

(11) Publication number: **0 151 044**
**B1**

## (12) EUROPEAN PATENT SPECIFICATION

(45) Date of publication of patent specification: **18.10.89**

(21) Application number: **85300673.2**

(22) Date of filing: **31.01.85**

(51) Int. Cl.⁴: **B 23 C 3/28** // B60T1/00

(54) **Method of forming a plurality of notches on a side of a disc.**

(30) Priority: **31.01.84 JP 15419/84**

(43) Date of publication of application:
**07.08.85 Bulletin 85/32**

(45) Publication of the grant of the patent:
**18.10.89 Bulletin 89/42**

(84) Designated Contracting States:
**CH DE FR GB IT LI NL**

(56) References cited:
**GB-A-2 097 078**
**US-A-1 334 147**
**US-A-1 614 558**
**US-A-2 397 086**

(73) Proprietor: **FUJI JUKOGYO KABUSHIKI KAISHA**
**7-2 Nishishinjuku 1-chome Shinjuku-ku**
**Tokyo (JP)**

(72) Inventor: **Takahashi, Masahiko**
**3-8-7 Shoan**
**Suginami-ku Tokyo (JP)**
Inventor: **Arai, Yasuhiro**
**3829 Jindaiji**
**Mitaka-shi Tokyo (JP)**

(74) Representative: **Eyles, Christopher Thomas et al**
**BATCHELLOR, KIRK & EYLES 2 Pear Tree Court**
**Farringdon Road**
**London, EC1R 0DS (GB)**

Courier Press, Leamington Spa, England.

## Description

The present invention relates to a continuously variable transmission for transmitting power of an internal combustion engine to driving wheels of a motor vehicle.

A motor vehicle provided with such a transmission also has a parking lock mechanism which, under certain circumstances, serves to lock a part of the transmission to which the driving wheels are connected.

In GB—A—2097078 there is disclosed a continuously variable transmission comprising a clutch; a drive pulley including an axially shiftable disc, a non-shiftable disc and a first hydraulic cylinder for shifting the shiftable disc; a driven pulley including an axially shiftable disc, a non-shiftable disc and a second hydraulic cylinder for shifting the shiftable disc; and a belt engaged with both pulleys. In addition, a parking pawl is shown which can be moved into a position where it engages with, and prevents rotation of, a parking gear which is in driving connection with the differential of the vehicle.

The present invention is characterised in that the periphery of the non-shiftable disc of the driving pulley has a plurality of notches therein, each of which is engageable with the parking pawl and has at least in part substantially trapezoidal form in cross-section.

In order that the invention may be more readily understood, it will now be described, by way of example only, with reference to the accompanying drawings, in which—

Figures 1a and 1b are sectional views of an infinitely variable belt-drive transmission to which the present invention is applied;

Figure 2 is a sectional view showing a main part of a parking lock mechanism;

Figure 3 is a sectional elevational view taken along a line III—III of Figure 2;

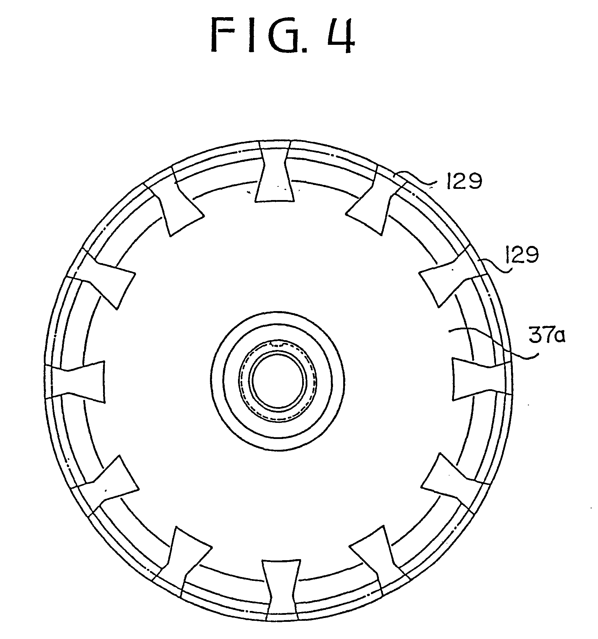

Figure 4 is a front view of a disc of the driven pulley; and

Figures 5 and 6 are illustrations explaining a method of forming the notches.

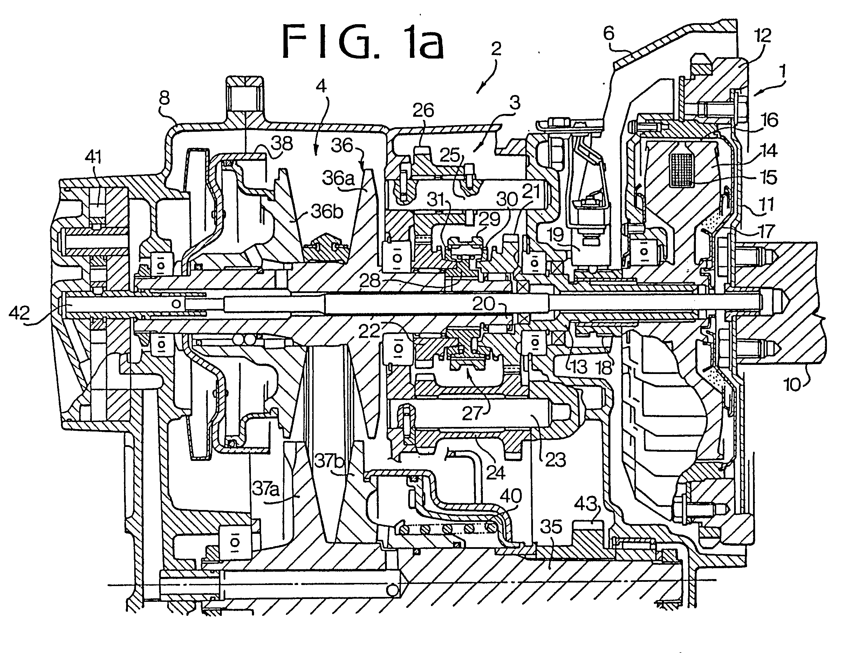

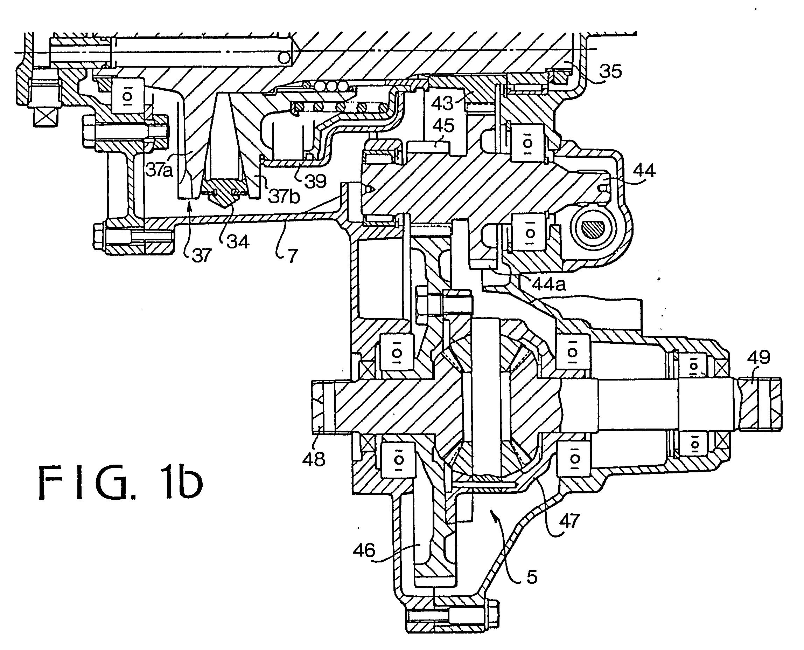

Referring to Figs. 1a and 1b, an infinitely variable belt-drive automatic transmission for a vehicle, to which the present invention is applied, comprises an electromagnetic powder clutch 1, an infinitely variable belt-drive transmission 2, a selector device 3, pulleys and belt device 4, final reduction device 5, and a pressure oil control circuit (not shown). The electromagnetic powder clutch 1 is provided in a housing 6, and the selector device 3, pulleys and belt device 4 and final reduction device 5 are provided in a main housing 7 and a side housing 8. A crankshaft 10 of an engine (not shown) is connected to an annular drive member 12 through a drive plate 11 of the electromagnetic powder clutch 1. The electromagnetic powder clutch comprises a driven member 14 and a magnetizing coil 15 provided in the driven member 14. The driven member 14 has it outer periphery spaced from the inner periphery of the drive member 12 by a gap 16, and a powder chamber 17 is defined between the drive member 12 and driven member 14. Powder of magnetic material is provided in the powder chamber 17. The driven member 14 is secured to an input shaft 13 of the belt-drive transmission. A holder secured to the driven member 14 carries slip rings 18 which are electrically connected to the coil 15. The coil 15 is supplied through brushes 19 and slip rings 18 with current from a control circuit for the electromagnetic powder clutch.

When the magnetizing coil 15 is excited by the clutch current, driven member 14 is magnetized to produce a magnetic flux passing through the drive member 12. The magnetic powder is aggregated in the gap 16 by the magnetic flux and the driven member 14 is engaged with the drive member 12 by the powder. On the other hand, when the clutch current is cut off, the drive and driven members 12 and 14 are disengaged from one another.

In the belt-drive transmission 2, the selector device 3 is provided between the input shaft 13 and a main shaft 20. The main shaft 20 is cylindrical and is disposed coaxially with the input shaft 13. The selector device 3 comprises a drive gear 21 integral with input shaft 13, reverse driven gear 22 rotatably mounted on the main shaft 20, and a synchronizer 27 as coupling means mounted on the main shaft 20. The drive gear 21 meshes with one of counter gears 24 rotatably mounted on a shaft 23. Another gear of the counter gears 24 engages with an idler gear 26 rotatably mounted on a shaft 25, which in turn engages with the driven gear 22.

The synchronizer 27 comprises a hub 28 secured to the main shaft 20, a synchronizer sleeve 29 slidably engaged with the hub 28 with splines, and synchronizer rings 30 and 31. The synchronizer sleeve 29 is adapted to engage with splines of the drive gear 21 or with splines of driven gear 22 through rings 30 or 31.

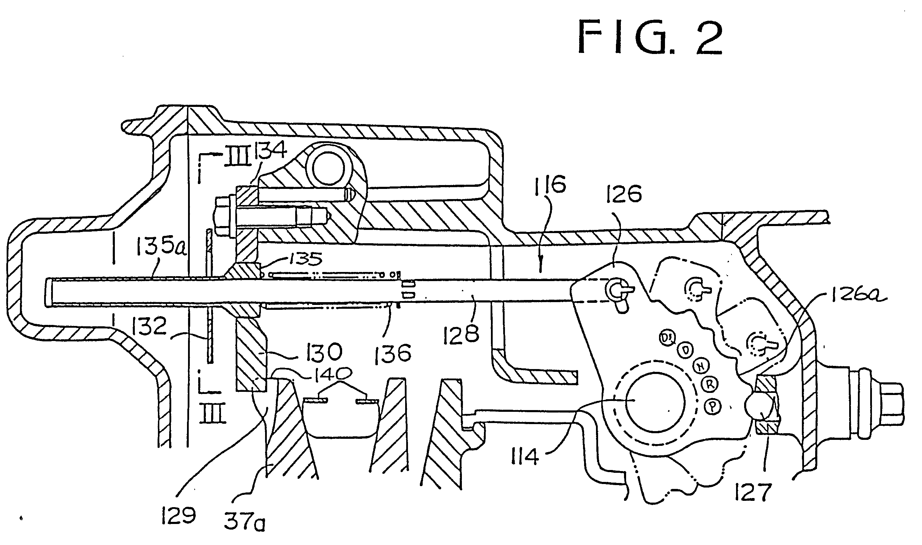

At a neutral position (N range) of a selector lever 50 (Fig. 2), the sleeve 29 does not engage either gear, so that the main shaft 20 is disconnected from the input shaft 13. When the sleeve 29 is engaged with the gear 21, the input shaft 13 is connected to the main shaft 20 through a forward gear train comprising the gear 21 and synchronizer 27 thereby to provide a forward drive position (D range).

When the sleeve 29 is engaged with the gear 22, the input shaft 13 is connected to the main shaft 20 through a reverse gear train comprising gears 21, 24, 26 and 22 to provide a reverse drive position (R range).

The main shaft 20 has an axial passage in which an oil pump driving shaft 42 connected to crankshaft 10 is mounted. An output shaft 35 is provided in parallel with the main shaft 20. A drive pulley 36 and a driven pulley 37 are mounted on shafts 20 and 35. A non shiftable conical disc 36a of the drive pulley 36 is integral with main shaft 20 and a shiftable conical disc 36b is axially slidably mounted on the main shaft 20. The shiftable conical disc 36b also slides in a cylinder secured to the main shaft 20 to form a servo device 38. A chamber of the servo device 38 communicates with an oil pump 41 through the pressure oil control circuit. The oil pump 41 is driven by the shaft 42.

An non shiftable conical disc 37a of the driven pulley 37 is formed on the output shaft 35 opposite the shiftable disc 36b and a shiftable conical disc 37b is slidably mounted on the shaft 35 opposite disc 36a. Shiftable conical disc 37b has a cylindrical portion in which a piston portion of the output shaft 35 is slidably engaged to form a servo device 39. A chamber of the servo device 39 is communicated with the oil pump 41 through the pressure oil control circuit. A spring 40 is provided to urge the shiftable conical disc 37b to the non shiftable conical disc 37a. A drive belt 34 engages with the drive pulley 36 and the driven pulley 37.

Secured to the output shaft 35 is a drive gear 43 which engages with an intermediate reduction gear 44a on an intermediate shaft 44. An intermediate gear 45 on the shaft 44 engages with a final gear 46. Rotation of the final gear 46 is transmitted to axles 48 and 49 of the vehicle driving wheels through a differential 47.

The pressure oil control circuit is responsive to vehicle speed, engine speed and throttle valve position for controlling the oil from the oil pump 41 to servo devices 38 and 38 thereby to move discs 36b and 37b. Thus, the transmission ratio is infinitely changed.

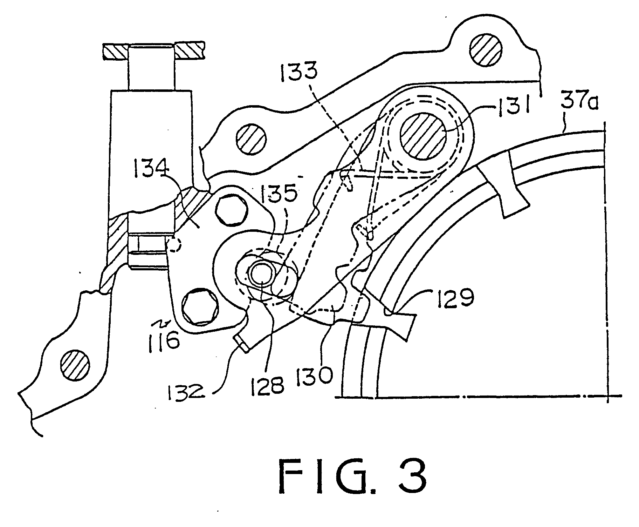

Referring to Figs. 2 and 3, a parking lock mechanism 116 comprises a detent plate 126 having five indentations 126a, secured to a rotative shaft 114 and a spring loaded positioning ball 127 engaged with the detent plate so as to engage one of the indentations 126a in order to hold the shaft at a selected angular position.

The parking lock mechanism 116 further comprises a rod 128 connected to the detent plate 126, and a parking pawl 130 rotatably mounted on a shaft 131 secured to the main housing 7 at a base end thereof and adapted to be engaged with one of locking notches 129 formed on the periphery of the non shiftable disc 37a of the driven pulley 37. A spring 133 provided between the pawl 130 and a support plate 132 urges the pawl in the clockwise direction in Fig. 3 so that the back side of the pawl engages with a conical cam 135. The cam 135 has a cylindrical portion 135a which is slidably mounted on the rod 128 and biased by a spring 136 to the left in Fig. 2. Corresponding to the pawl 130, a pusher plate 134 is secured to the main housing 7 so as to engage with the cam 135 to push the pawl to the disc 37a.

When a selector lever is shifted to a parking position, the shaft 114 rotates in the counterclockwise direction and the rod 116 is located at the left most position by the detent plate 126 as shown in Fig. 2. Thus the cam 135 enters between the pusher plate 134 and pawl 130, so that the pawl 130 is rotated about the shaft 131 to be engaged with one of the notches 129 as shown in Fig. 3. If the pawl 130 does not coincide with the notch 129, the cam 135 can not enter between the plate 134 and the pawl 130. Accordingly, the spring 136 is compressed to permit the movement of the rod 128. When one of the notches 129 coincides with the pawl 130 because of slight movement of the vehicle the pawl engages with the notch to clock the disc 37a.

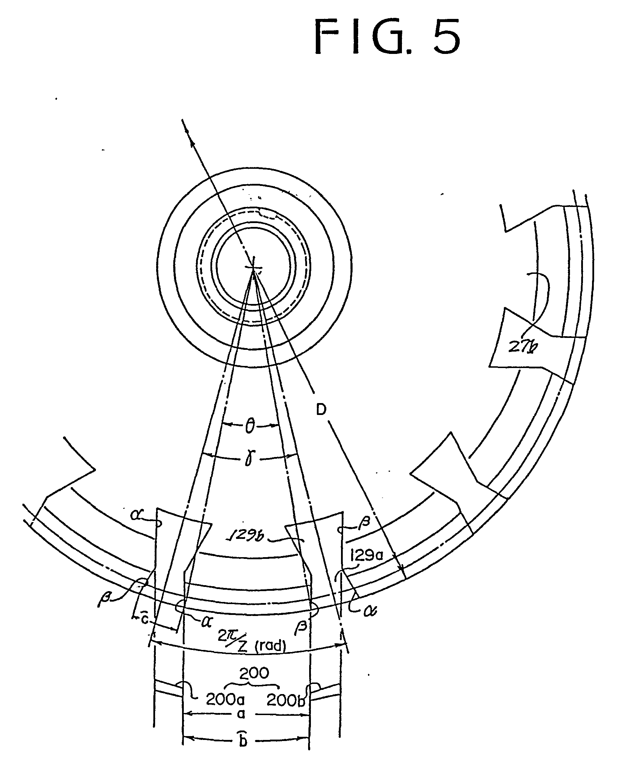

The disc 37a has an annular projection 140 along an outside periphery thereof and each notch 129 is formed in a portion including the projection 140. Each notch 129 comprises a first notch 129a having angles α and β to form a trapezium with a wider opening and a second notch 129b having angles α and β to form an inverted trapezium, as shown in Figure 5. The parking pawl 130 engages with one of the first notches 129a.

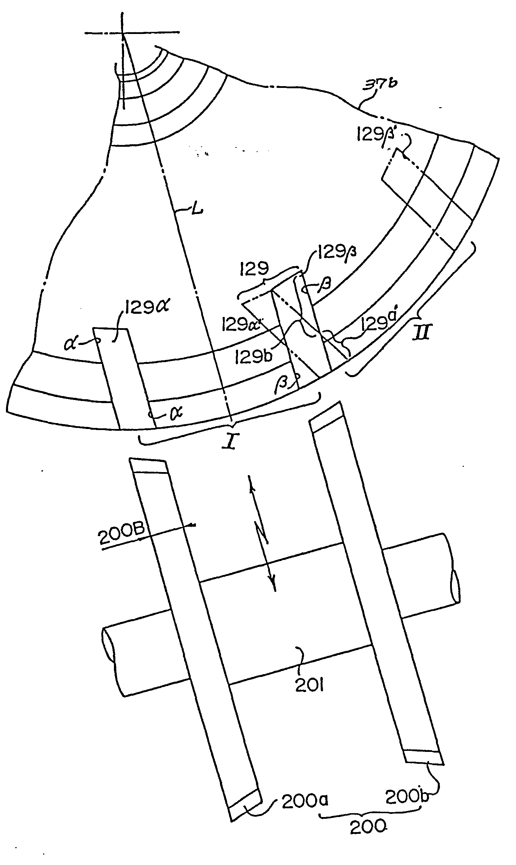

Referring to Figures 5 and 6, in order to form the notches 129, there is used a cutter 200 comprising a pair of parallel milling cutters 200a and 200b on a shaft 201. whe shaft 201 is disposed in the tangential direction of the disc 37b and both cutters 200a and 200b are symmetrically disposed with respect to the line L passing through the axis of the disc and perpendicular to the shaft 201. The cutter 200 is fed along the line so that two portions of the disc are cut by the milling cutters at the same time. As shown in Figure 6, at the first step I, a notch 129a is formed by the cutter 200a, having the angle α and a width corresponding to the width 200B of the cutter 200a, and a notch 129 having the angle β. Then, the cutter is retracted and the disc is indexed in the clockwise direction by an angle γ dependent on the pitch of the notches (Figure 6). If the number of notch 129 is Z, the angle (rad) is $2\pi/Z$. At the second step II, the cutters are fed again, thereby forming notches 129α' and 129β'. By repeating such an operation a plurality of notches 129 are formed in an efficient manner.

The space length $a$ between cutters 200a and 200b is decided as follows. The length $\hat{b}$ of the arc corresponding the length $a$ and angle θ (rad) can be expressed, as

$$\hat{b} = (\pi D - Z\hat{c})/Z$$
$$\theta = 2\hat{b}/D$$
$$\therefore a = D \sin(\theta/2)$$

where
Z is the number of the notch,
D is the diameter of the disc 27b,
$\hat{c}$ is the length of the arc of the opening.

Although one set of the milling cutters is provided in the illustrated embodiment, a plurality of sets can be provided around the disc.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A continuously variable transmission for transmitting the power of an internal combustion engine to driving wheels of a motor vehicle comprising a clutch (1); a drive pulley (4) including an axially shiftable disc (36b), a non-shiftable disc (36a) and a first hydraulic cylinder (38) for shifting the shiftable disc; a driven pulley (37) including an axially shiftable disc (37b), a non-shiftable disc (37a) and a second hydraulic cylinder for shifting the shiftable disc; a belt (34) engaged with both pulleys; and a parking pawl; characterised in that the periphery of the non-shiftable disc of the driven pulley has a plurality of notches (129) therein, each of which is engagable with the parking pawl and has at least in part a substantially trapezoidal form in cross-section.

2. A motor vehicle characterised by the provision of a continuously variable transmission according to claim 1.

## Patentansprüche

1. Stufenloses Getriebe zur Übertragung der Kraft einer Verbrennungsmaschine auf Antriebsräder eines Motorfahrzeuges mit einer Kupplung (1), einer Antriebsscheibe (4), die eine axial verschiebbare Scheibe (36b), eine nicht verschiebbare Scheibe (36a) und einen ersten Hydraulikzylinder (38) zum Verschieben der verschiebbaren Scheibe aufweist, einer angetriebenen Scheibe (37), die eine axial verschiebbare Scheibe (37b), eine nicht verschiebbare Scheibe (37a) und einen zweiten Hydraulikzylinder zum Verschieben der verschiebbaren Scheibe aufweist, einem mit beiden Scheiben in Eingriff stehenden Riemen und einer Park-Sperrklinke, dadurch gekennzeichnet, daß der Umfang der nicht verschiebbaren Scheibe der angetriebenen Scheibe eine Vielzahl von Nuten (129) aufweist, von denen jede mit der Park-Sperrklinke in Eingriff bringbar ist und wenigstens teilweise einen im wesentlichen trapezförmigen Querschnitt aufweist.

2. Motofahrzeug, gekennzeichnet durch ein stufenloses Getriebe nach Anspruch 1.

## Revendications

1. Une transmission à variation continue prévue pour transmettre l'énergie d'un moteur à combustion interne à des roues motrices d'un véhicule à moteur, comprenant un embrayage (1); une poulie d'entraînement (4) qui comprend un disque mobile en direction axiale (36b), un disque fixe (36a) et un premier cylindre hydraulique (38) pour déplacer le disque mobile; une poulie entraînée (37) comprenant un disque mobile en direction axiale (37b), un disque fixe (37a) et un second cylindrique hydraulique pour déplacer le disque mobile; une courroie (34) qui passe sur les deux poulies; et un cliquet de stationnement; caractérisé en ce qu'il existe à la périphérique du disque fixe de la poulie entraînée un ensemble d'encoches (129) dans chacune desquelles peut pénétrer le cliquet de stationnement, et chacune de ces encoches a une section droite dont la forme est en partie sensiblement trapézoïdale.

2. Un véhicule à moteur caractérisé par le fait qu'il comprend une transmission à variation continue conforme à la revendication 1.

FIG. 1a

FIG. 1b

2

# FIG. 2

EP 0 151 044 B1

# FIG. 3

4

# FIG. 4

129

129

37a

# FIG. 5

EP 0 151 044 B1

7